# EUROPEAN PATENT SPECIFICATION

(11) **EP 2 890 350 B1**
(45) Date of publication and mention of the grant of the patent: **20.12.2017**
(21) Application number: 13773588.2
(22) Date of filing: 28.08.2013
(51) Int. Cl.: A61G 7/08

(54) **SYSTEM FOR PROPELLING HOSPITAL BED**
SYSTEM ZUR ANSTEUERUNG EINES KRANKENHAUSBETTES
SYSTÈME PERMETTANT DE FAIRE AVANCER UN LIT D'HÔPITAL

(30) Priority: 29.08.2012 CZ 20120587
(43) Date of publication of application: 08.07.2015
(73) Proprietor: Linet Spol. S.R.O., 27401 Slany (CZ)
(72) Inventor: SULC, Pavel, SE-18494 Akersberga (SE); JORDÁN Michal, CZ-687 37 Polesovice (CZ); HARTMAN, Marek, CZ-274 01 Slaný (CZ)
(86) International application number: PCT/CZ2013/000101
(87) International publication number: WO 2014/032634

(56) References cited:
- WO-A1-2009/065109
- WO-A2-01/47340
- US-A1- 2005 126 835

## Description

### Technical field

The invention relates to a system for propelling a hospital bed using an auxiliary drive. Such auxiliary drives are generally known as drive wheels, which serve to make it easier to move heavy beds and heavy patients.

### Background Art

Auxiliary drives are commonly used in combination with hospital beds. Their main purpose is to make work easier for hospital personnel, who would otherwise have to use only their own strength to push loads when moving beds from one place to another. These actions make the personnel tired or lead to injury. Two types of auxiliary drives can fulfil the purpose of auxiliary power. One type is a drive that is integrated directly into the construction of a bed with which a fifth drive wheel is firmly connected and the second type is an actual transport device, a "bed mover", which is only connected to the bed when it is necessary to move the bed. This second type is usually in the form of a transport device such as a pallet truck, which in terms of its construction is adapted for the transport of hospital beds. One example of such a device is patent no. US 7,914,247.

The first type, i.e., the fifth drive wheel, is located in the undercarriage of the hospital bed, where its location also constitutes an axis around which the hospital bed rotates during handling. These fifth drive wheels are generally augmented with other functions that are used when no drive is necessary, such as clutch or the retraction of the wheel into the undercarriage. An example of a clutch applied in a drive wheel is given in patent no. US 6,330,926. Patent application no. US 2011277241 shows a type of retractable fifth wheel. The movement of a bed in hospitals requires accurate and precise handling, which the transport equipment of the pallet truck type only attains poorly. This problem is not wholly eliminated even in the case of integrated auxiliary drives, because they are often controlled by handles located either at the head or foot of the bed. In many situations handling the bed requires that the direction of movement is influenced from parts of the bed other than its footboard or headboard. For example, in places with little room for manoeuvring the medical staff will grasp the bed by some other part and thus lose the possibility of using the auxiliary drive. This is particularly exhausting when handling obese patients, for example. Another disadvantage is that it is necessary to use the entire hand to operate such a controller, and the operator cannot use both hands at the same time for manipulating the bed and also controlling the auxiliary drive. In practice there are different requirements for the location of the controller either on the footboard or headboard. The location of a larger number of differently located control members, such as in EP1911429A2, represents a partial solution to eliminate this problem. But the solution described in that document is overly complex, complicated for the operator and expensive.
WO2009/065109 discloses another system for propelling a hospital bed.

### Summary of the invention

The above mentioned problem is solved by a system for propelling a hospital bed, according to claim 1, which is removably attached to the bed and which comprises control of the necessary functions for the mobility of the entire hospital bed. The controller can be located on the side rail of the bed or on its headboard or footboard. This location may be in the proximity of the points of the bed intended for grasping, so the operator can control the bed with no need to take their hands off these grasping points. One part of the controller is a control member for controlling the direction of movement of the bed and its speed.

According to the present invention the auxiliary drive controller improves the manoeuvrability of the bed and increases the comfort for the operator.

According to a preferred embodiment a docking member is added to the hospital bed for the safer fixing of the controller to the bed. This docking member may have a supplementary detection of insertion, which controls the activation of the removable controller.

According to another preferred embodiment one part of the controller is also a brake control and an indicator of the bed's or auxiliary drive's battery state.

### Brief description of the drawings

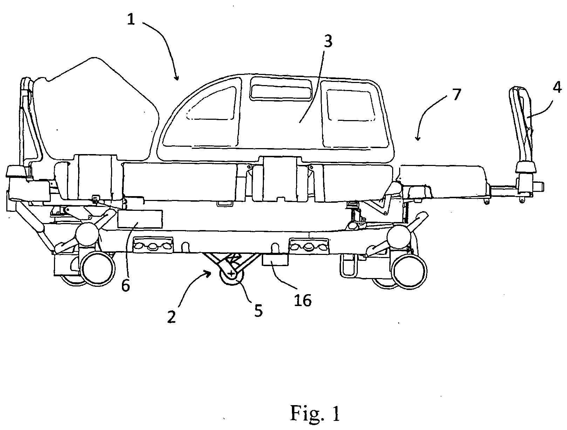

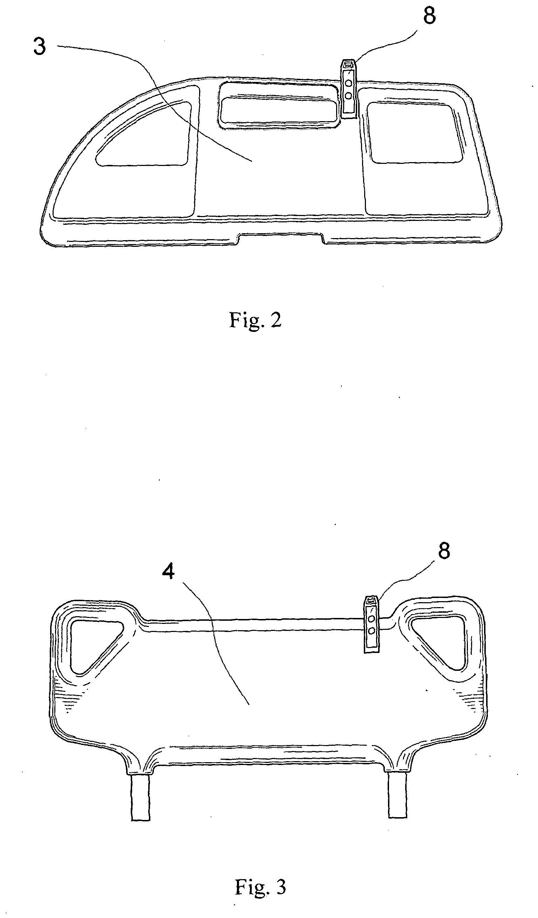

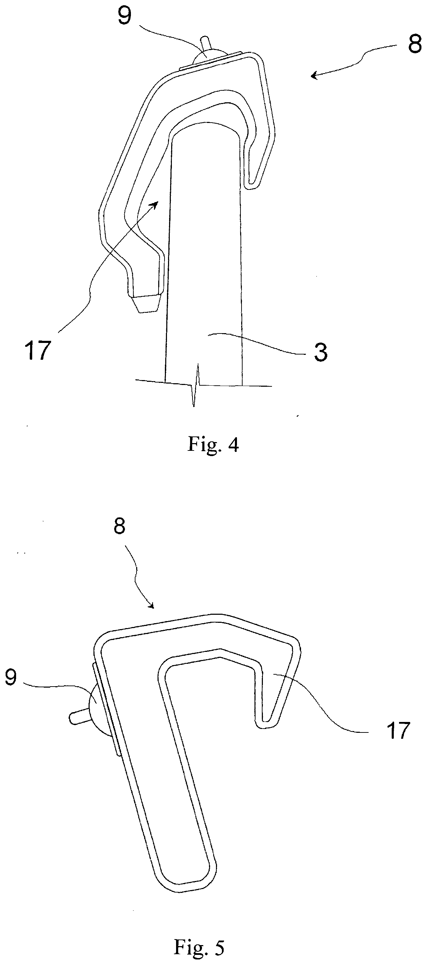

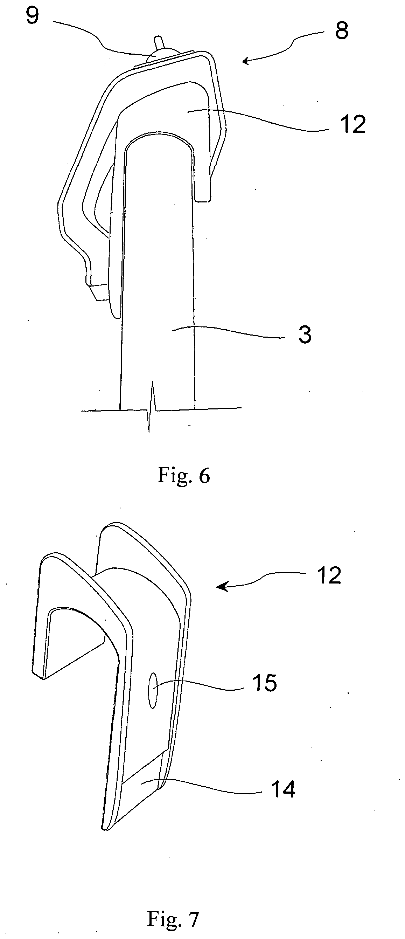

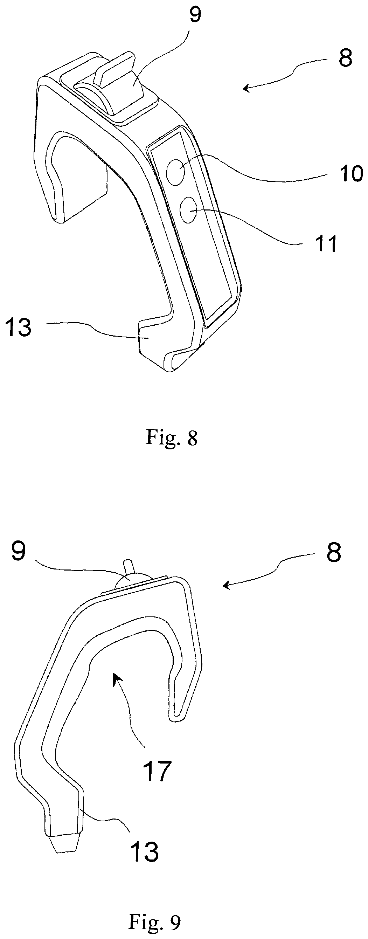

Fig. 1 shows a hospital bed. Fig. 2 shows the auxiliary drive controller according to the present invention, which is fixed to the bed's side rail. Fig. 3 depicts the auxiliary drive controller connected to the board of the hospital bed. Fig. 4 shows a cross-section of the controller fixed to the side rail. Fig. 5 shows the controller with the supplementary fixing member. Fig. 6 shows a cross-section of the controller connected to the side rail using a docking member. On Fig. 7 is shown a detail of the docking member. Fig. 8 and fig. 9 show a detail of the auxiliary drive controller.

### Detailed description of the drawings

On fig. 1 is shown the hospital bed 1, to which the auxiliary drive 2 is connected. Several side rails 3 are connected to the bed and these side rails 3 prevent in mutual cooperation the patient from falling out of the bed 1. Boards 4 are fitted to the head and foot, end of the hospital bed 1. The auxiliary drive 2 is fixed firmly to the undercarriage of the bed 1 and comprises the mechanism of the fifth wheel 5, a drive for positioning and a drive for propelling. The fifth wheel 5 mechanism is well known from prior art and an example of such a mechanism is described, for example, in patent application No US 2011277241. The movement of the fifth wheel 5 between the upper and lower position is controlled by the drive for positioning, and the movement of the bed 1 is activated by the drive for propelling. The drives can be powered from batteries located in the frame of the hospital bed 1. It is evident to person having ordinary skill in the art how to link such drives of the fifth wheel 5 for the given functionality. The bed control unit 6 is connected to the frame of the hospital bed 1 and in addition to the basic configurations of the bed 1, it controls one or two drives connected to the fifth wheel 5 via the fifth wheel control unit 16. The auxiliary drive controller 8, which is displayed on the further figures, is also connected to the central bed control unit 6. In fig. 4 is clearly visible the control member 9 of the auxiliary drive controller 8, according to the configuration of which there is a selection of parameters according to which the bed control unit 6 activates the fifth wheel 5 drive. As an alternative the communication of the auxiliary drive controller 8 with the fifth wheel control unit 16 can be provided directly without the need for the connection of the bed control unit 6. The fifth wheel control unit 16 can thus be on the hospital bed 1 on its own, without a central control unit, so its absence does not prevent the function of the auxiliary drive controller 8 or the function of auxiliary drive 2. The fifth wheel control unit 16 may be located anywhere on the bed chassis or, for example, near or directly on the drive for propelling or the actual fifth wheel 5.

As can be seen in fig. 5, the auxiliary drive controller 8 has the shape of a regular controller, but it also has a fixing member 17 enabling the attachment of the auxiliary drive controller 8 to the frame of the hospital bed 1. Then it is possible to easily place the auxiliary drive controller 8 in a suitable place on the hospital bed 1 frame.

In the alternative embodiment, as seen in fig. 9, the fixing member 17 can be designed so that, by virtue of its size, it constitutes the load-bearing body of the auxiliary drive controller 8. In this embodiment the control member 9 is located in a suitable place of such a fixing member 17.

As can be seen in fig. 2, as a result of its shape the auxiliary drive controller 8 may be connected in a removable manner to the side rail 3 of the hospital bed 1. For connection it is sufficient to slide the auxiliary drive controller 8 onto the side rail 3, which the auxiliary drive controller 8 clips onto snugly by virtue of its shape. The operator can simply slide it off this position with an upward movement of the auxiliary drive controller 8.

Another possible location of the auxiliary drive controller 8 on the hospital bed 1 can be seen in fig. 3, where the auxiliary drive controller 8 is attached to the board 4 of the hospital bed 1. Like the location on the side rail 3, this location is preferred for the operator because the operator naturally moves the hospital bed 1 by grasping the board. In this case the auxiliary drive controller 8 can be slid onto a position on the board 4 where the operator can control the grasped bed 1 with both hands and can also activate the auxiliary drive 2 of the fifth wheel 5 via the control member 9 by using, for example, the right thumb.

Fig. 4 shows a cross-section through the side rail 3 with auxiliary drive controller 8. As can be seen in fig. 6 a docking member 12 can be used for attaching the auxiliary drive controller 8. This docking member 12 ensures position of the auxiliary drive controller 8 in a predefined place and prevents its easy unwanted deployment. The docking member 12 may be firmly fixed to the hospital bed 1 and its internal shape may be manufactured for the perfectly flush fitting of the docking member 12 to any part of the hospital bed 1 to which the docking member 12 is fitted. As shown in fig. 7, in a preferred embodiment the docking member 12 may include the recess 14 and the auxiliary drive controller 8 may include the protrusion 13 shown in fig. 8 and 9 which will fit together, thus ensuring the safer locking of the auxiliary drive controller 8. In another embodiment of the invention the recess 14 may be located on the auxiliary drive controller 8 and the protrusion 13 may be located on the docking member 12. Fig. 7 shows a preferred embodiment where the docking member 12 includes a sensor 15 for verification of the correct fixing of the auxiliary drive controller 8. Such a sensor 15 may, for example, be in the form of an end switch located within the recess 14 which permits the hospital bed 1 to be driven only after it is switched on by the protrusion 13. The sensor 15 may be in the form of other detectors using, for example, optical, magnetic, electrical, mechanical or other principles. Sliding on the auxiliary drive controller 8 results in the activation of the sensor 15 and this sends a signal via the connection to the fifth wheel control unit 16 that the auxiliary drive controller 8 has been docked. The function of the auxiliary drive controller 8 will be activated depending on this. As an alternative, such a sensor 15 can be located on the body of the auxiliary drive controller 8.

In another embodiment the functionality of the auxiliary drive controller 8 is not dependent on its being fixed to the hospital bed 1 and the operator can activate the auxiliary drive 2 at any time when the controller 8 is activated using the activation button 10.

Fig. 8 shows the control elements of the auxiliary drive controller 8 located on its front side. These control elements comprise the activation button 10, deactivation button 11 and control member 9. The auxiliary drive controller 8 may also have a battery state indicator, which can also indicate that the hospital bed 1 is connected to the power via an electrical socket. The auxiliary drive 2 is activated via the activation button 10, after the pressing of which the remaining members of the auxiliary drive controller 8 are unlocked. In connection with activation via the activation button 10, the fifth wheel 5 may be deployed to the lower position using one of the drives of the fifth wheel 5. In a preferred embodiment the activation button 10 can control the brake release if the controller, according to the present invention, is connected to an auxiliary drive 2 including a brake. The deactivation button 11 causes the deactivation of the control member 9, and the deactivation button 11 can be preferably used to put the brakes on. The actual control member 9 serves for the activation of the drive for propelling the fifth wheel 5 which ensures the movement of the hospital bed 1 in respect to the surface. The control member 9 could be, for example, simple buttons, a two-way joystick or a touch control using, for example, any of the resistance, capacitance, acoustic, infrared and other technologies. The control member 9 configures parameters of the direction and the speed at which the bed 1 will move over the surface. Several auxiliary drive controllers 8 can be preferably used on the bed 1. The activation button 10 is then used for the activation of one of them.

## Claims

1. A system for propelling a hospital bed (1) comprising a controller (8), a control unit (16) and an auxiliary drive (2), the controller (8) connected to the control unit (16) for controlling the auxiliary drive (2) and the control unit (16) connected to the auxiliary drive (2) for movement of the bed (1) in respect to the surface, the bed (1) comprising at least one of a side rail (3) and a board (4) wherein the controller (8) is connected to at least one of the side rail (3) and board (4) and comprises a member for fixing (17) the controller (8) to part of the bed (1), said controller (8) being removable by sliding off its position from at least one of the side rail (3) and board (4), and being operable to activate the auxiliary drive (2) even if the controller (8) is not being fixed to the hospital bed (1), the controller comprises at least one user-activated member (9) to control the movement of the bed in respect to the surface.

2. The system for propelling a hospital bed (1) according to claim 1 **is characterized in that** the user-activated element (9) has touch control.

3. The system for propelling a hospital bed (1) according to claim 1 **is characterized in that** the user-activated element (9) is a joystick.

4. The system for propelling a hospital bed (1) according to claim 1 **is characterized in that** the user-activated element (9) is a simple button.

5. The system for propelling a hospital bed (1) according to claim 1 **is characterized in that** the board (4) comprises a docking member (12).

6. The system for propelling a hospital bed (1) according to claim 5 **is characterized in that** the docking member (12) comprises a protrusion (13).

7. The system for propelling a hospital bed (1) according to claim 5 **is characterized in that** the docking member (12) comprises a recess (14).

8. The system for propelling a hospital bed (1) according to claim 1 **is characterized in that** the side rail (3) of the hospital bed (1) comprises a docking member (12).

9. The system for propelling a hospital bed (1) according to claim 8 **is characterized in that** the docking member (12) comprises a protrusion (13).

10. The system for propelling a hospital bed (1) according to claim 8 **is characterized in that** the docking member (12) comprises a recess (14).

11. The system for propelling a hospital bed (1) according to claim 1 **is characterized in that** the fixing element (17) of the controller (8) constitutes a fundamental part of the body of the controller (8).

## Patentansprüche

1. Ein System zum Antrieb eines Kranken- oder Pflegebettes (1) umfassend ein Bedienteil (8), eine Steuereinheit (16) und einen Hilfsantrieb (2), das Bedienteil (8) an die Steuereinheit (16) angeschlossen ist, um den Hilfsantrieb (2) zu steuern und die Steuereinheit (16) an den Hilfsantrieb (2) angeschlossen ist, um das Bett (1) bezüglich der Liegefläche zu bewegen, wobei das Bett (1) mindestens eine Seitensicherung (3) und ein Fußteil (4) umfasst, **wobei** das Bedienteil (8) mit mindestens einer der Seitensicherungen (3) und dem Fußteil (4) verbunden ist und ein Element zur Befestigung (17) des Bedienteils (8) an einem Teil des Bettes (1) umfasst, wobei das genannte Bedienteil (8) durch Abnehmen von seiner Position von mindestens einer Seitensicherung (3) und dem Fußteil (4) entfernt und betätigt werden kann, um den Hilfsantrieb (2) zu aktivieren, auch wenn das Bedienteil (8) nicht am Kranken- oder Pflegebett (1) befestigt ist. Das Bedienteil umfasst mindestens ein vom Benutzer zu aktivierendes Element (9), um die Bewegung des Bettes bezüglich der Liegefläche zu steuern.

2. Das System zum Antrieb eines Kranken- oder Pflegebettes (1) nach Anspruch 1 **ist dadurch gekennzeichnet, dass** das vom Benutzer zu aktivierende Element (9) eine Berührungssteuerung hat.

3. Das System zum Antrieb eines Kranken- oder Pflegebettes (1) nach Anspruch 1 **ist dadurch gekennzeichnet, dass** das vom Benutzer zu aktivierende Element (9) ein Joystick ist.

4. Das System zum Antrieb eines Kranken- oder Pflegebettes (1) nach Anspruch 1 **ist dadurch gekennzeichnet, dass** das vom Benutzer zu aktivierende Element (9) eine einfache Taste ist.

5. Das System zum Antrieb eines Kranken- oder Pflegebettes (1) nach Anspruch 1 **ist dadurch gekennzeichnet, dass** das Fußteil (4) eine Dockingstation umfasst.

6. Das System zum Antrieb eines Kranken- oder Pflegebettes (1) nach Anspruch 5 **ist dadurch gekennzeichnet, dass** die Dockingstation (12) einen Übergriff (13) umfasst.

7. Das System zum Antrieb eines Kranken- oder Pflegebettes (1) nach Anspruch 5 **ist dadurch gekennzeichnet, dass** die Dockingstation (12) eine Aussparung (14) umfasst.

8. Das System zum Antrieb eines Kranken- oder Pflegebettes (1) nach Anspruch 1 **ist dadurch gekennzeichnet, dass** die Seitensicherung (3) des Kranken- oder Pflegebettes (1) eine Dockingstation (12) umfasst.

9. Das System zum Antrieb eines Kranken- oder Pflegebettes (1) nach Anspruch 8 **ist dadurch gekennzeichnet, dass** die Dockingstation (12) einen Übergriff (13) umfasst.

10. Das System zum Antrieb eines Kranken- oder Pflegebettes (1) nach Anspruch 8 **ist dadurch gekennzeichnet, dass** die Dockingstation (12) eine Aussparung (14) umfasst.

11. Das System zum Antrieb eines Kranken- oder Pflegebettes (1) nach Anspruch 1 **ist dadurch gekennzeichnet, dass** das Befestigungselement (17) des Bedienteils (8) einen grundlegenden Teil des Gehäuses des Bedienteils (8) bildet.

## Revendications

1. Système de propulsion d'un lit d'hôpital (1) comprenant un dispositif de commande (8), une unité de commande (16) et un entraînement auxiliaire (2), le dispositif de commande (8) étant connecté à l'unité de commande (16) pour commander l'entraînement auxiliaire (2) et l'unité de commande (16) étant connectée à l'entraînement auxiliaire (2) pour le déplacement du lit (1) par rapport à la surface, le lit (1) comprenant au moins une barrière latérale (3) et un panneau de lit (4), **dans lequel** le dispositif de commande (8) est au moins connecté à une barrière latérale (3) et un panneau de lit (4) et qui comprend un élément de fixation (17) du dispositif de commande (8) à une partie du lit (1), ledit dispositif de commande (8) étant amovible par coulissement hors de sa position à partir d'au moins une barrière latérale (3) et un panneau de lit (4) et pouvant être actionné pour activer l'entraînement auxiliaire (2), même si le dispositif de commande (8) n'est pas fixé à un lit d'hôpital (1), le dispositif de commande comprend au moins un élément activé par l'utilisateur (9) pour commander le déplacement du lit par rapport à la surface.

2. Le système de propulsion d'un lit d'hôpital (1) conformément à la revendication 1 **est caractérisé par le fait que** l'élément activé par l'utilisateur (9) dispose d'un contrôle tactile.

3. Le système de propulsion d'un lit d'hôpital (1) conformément à la revendication 1 **est caractérisé par le fait que** l'élément activé par l'utilisateur (9) est une manette de commande.

4. Le système de propulsion d'un lit d'hôpital (1) conformément à la revendication 1 **est caractérisé par le fait que** l'élément activé par l'utilisateur (9) est une simple touche.

5. Le système de propulsion d'un lit d'hôpital (1) conformément à la revendication 1 **est caractérisé par le fait que** le panneau de lit (4) comprend un élément de connexion (12).

6. Le système de propulsion d'un lit d'hôpital (1) conformément à la revendication 5 **est caractérisé par le fait que** l'élément de connexion (12) comprend une saillie (13).

7. Le système de propulsion d'un lit d'hôpital (1) conformément à la revendication 5 **est caractérisé par le fait que** l'élément de connexion (12) comprend un renfoncement (14).

8. Le système de propulsion d'un lit d'hôpital (1) conformément à la revendication 1 **est caractérisé par le fait que** la barrière latérale (3) du lit d'hôpital (1) comprend un élément de connexion (12).

9. Le système de propulsion d'un lit d'hôpital (1) conformément à la revendication 8 **est caractérisé par le fait que** l'élément de connexion (12) comprend une saillie (13).

10. Le système de propulsion d'un lit d'hôpital (1) conformément à la revendication 8 **est caractérisé par le fait que** l'élément de connexion (12) comprend un renfoncement (14).

11. Le système de propulsion d'un lit d'hôpital (1) conformément à la revendication 1 **est caractérisé par le fait que** l'élément de fixation (17) du dispositif de commande (8) constitue une partie essentielle du corps du dispositif de commande (8).
